# FASCICULE DE BREVET EUROPEEN

(11) **EP 2 872 920 B1**
(45) Date de publication et mention de la délivrance du brevet: **23.02.2022**
(21) Numéro de dépôt: 13735268.8
(22) Date de dépôt: 10.07.2013
(51) Int. Cl.: G01S 19/02, G01S 19/21, G01S 19/24, H04W 56/00

(54) **SIGNAL RADIO GNSS POUR UNE SYNCHRONISATION AMÉLIORÉE**
GNSS-FUNKSIGNAL FÜR VERBESSERTE SYNCHRONISATION
GNSS RADIO SIGNAL FOR IMPROVED SYNCHRONISATION

(30) Priorité: 11.07.2012 FR 1256696
(43) Date de publication de la demande: 20.05.2015
(73) Titulaire: Centre National d'Etudes Spatiales (CNES), 75039 Paris Cedex 01 (FR)
(72) Inventeur: GRELIER, Thomas, 31200 Toulouse (FR); RIES, Lionel, 81290 Viviers Les Montagnes (FR)
(74) Mandataire: Germain Maureau
(86) Numéro de dépôt international: PCT/EP2013/064573
(87) Numéro de publication internationale: WO 2014/009409

(56) Documents cités:
- EP-A1- 0 513 349
- "GPS Interface Specification - IS-GPS-200F", 21 septembre 2011 (2011-09-21), XP007921913, page 4, alinéa 3.2.1.3 page 40, alinéa 3.3.3.1.1 page 78, alinéa 20.3.2
- "Galileo - European GNSS - Open Service - Signal In Space Interface Control Document", 1 septembre 2010 (2010-09-01), XP007921912, page 26 - page 28
- SPILKER J J: "GPS SIGNAL STRUCTURE AND PERFORMANCE CHARACTERISTICS", NAVIGATION, INSTITUTE OF NAVIGATION, FAIRFAX, VA, US, vol. 25, no. 2, 21 juin 1978 (1978-06-21), pages 121-146, XP001080525, ISSN: 0028-1522

## Description

### Domaine technique

La présente invention concerne le champ technologique de la radionavigation par satellites. L'invention s'intéresse aux signaux de radionavigation émis par les satellites (ci-après « signaux radio GNSS » ou « signaux GNSS »), notamment au message de navigation communiqué par ces signaux aux récepteurs utilisateurs afin de leur permettre ou faciliter le géopositionnement.

### Etat de la technique

Les signaux GNSS (le segment « Signal-in-Space ») représentent la principale interface entre une infrastructure spatiale GNSS (de l'anglais « Global Navigation Satellite System » - système de positionnement par satellites) et ses différents segments utilisateurs. A ce titre, il porte une part importante des performances qui seront accessibles à l'utilisateur dans un environnement et un contexte d'usage donnés. La performance découle en effet des algorithmes de réception utilisés (fonction du contexte d'usage), et de la qualité du signal qui parvient à l'utilisateur (affectée par les conditions de propagation).

Les caractéristiques spectrales et temporelles du signal, telles que les paramètres de fréquence porteuse, de puissance, de modulation (rythme PRN, BPSK, BOC) conditionnent l'essentiel des performances pour l'interopérabilité, la poursuite, la robustesse aux multi-trajets et aux interférences, etc.

Le message de navigation est lui aussi un facteur prépondérant pour les performances. Il détermine les services en terme de contenu, mais également, par l'intermédiaire de sa structure, en terme de disponibilité (robustesse) et de latence (ou de réactivité). Le message de navigation contient, entre autres, un jeu de données d'éphémérides et de correction d'horloge (abréviées « DECH ») du satellite émetteur. Par jeu de DECH, on entend un ensemble de données suffisant pour permettre au récepteur de calculer la position de satellite et l'erreur d'horloge du satellite. Le message de navigation contribue de manière significative à la performance d'acquisition, en particulier au temps d'acquisition (aussi appelé en anglais « Time To First Fix »).

Pour autant, la conception d'un signal GNSS et de son message de navigation sont également le résultat de compromis entre les différents besoins de services et de contenus visés (par exemple et pour Galileo : Open Service (OS) , Safety of Life (SoL), Search And Rescue Return Link Message (SAR RLM), etc.), des objectifs de performances parfois antagonistes (réactivité et robustesse), et des contraintes opérationnelles ou technologiques (interopérabilité, Masse Consommation Volume des satellites, etc.).

Ainsi, les signaux Galileo E1 OS et GPS L1C incorporent de nombreuses évolutions en regard du signal GPS C/A: nouvelle structure de message de navigation, code PRN, modulations optimisées, etc. Tous deux visent entre autres le service ouvert, destiné pour l'essentiel à des récepteurs grand public, et fonctionnant souvent en environnement dégradé (canyon urbain, par exemple). Cependant, ces deux signaux diffèrent de manière significative dans leur conception : le signal GPS L1C ne vise qu'un service ouvert, tandis que le signal Galileo OS a été conçu pour adresser à la fois le service ouvert et fournir des données en temps réel pour l'intégrité (SoL) et la voie retour SAR (SAR RLM). De ce fait, le message Galileo contient non seulement des informations d'éphémérides et de temps (de correction d'horloge), mais également des données additionnelles.

On constate que les données de synchronisation diffusées dans le message de navigation notamment du service ouvert de Galileo (Galileo OS) souffrent d'un manque de robustesse. Ces informations étant nécessaires au calcul de la position du récepteur, la faible robustesse pénalise la performance de récepteurs Galileo en terme de seuil d'acquisition, en particulier dans les environnements « difficiles », tels que les canyons urbains ou à l'intérieur de constructions.

Le EP 0 513 349 décrit un procédé conventionnel de génération d'un message de navigation transmis en tant que suite de paquets de données. A chaque paquet de données est annexé un motif de symboles de synchronisation généré par un générateur de code de synchronisation distinct du générateur des données de navigation.

### Objet de l'invention

Un objet de la présente invention est d'augmenter la robustesse d'un signal GNSS véhiculant des informations utiles, notamment un message de navigation. Description générale de l'invention

Afin de résoudre le problème énoncé ci-dessus, il est proposé un signal radio GNSS comprenant un message de navigation transmis en tant que suite de paquets de données (p.ex. appelés « pages » ou « demi-pages »), éventuellement organisés en groupes (trames) et/ou sous-groupes (sous-trames), chaque paquet de données se présentant dans le signal radio GNSS en tant que séquence de symboles obtenue par application d'un code à des bits de données utiles (assurant la transposition du message binaire en mot de code) précédée par un en-tête de symboles de synchronisation. Les paquets de données sont internement organisés en champs de données. Conformément à l'invention au moins certains paquets de données de la suite de paquets de données contiennent un champ de bits de synchronisation traduit par application du code en un motif de symboles de synchronisation.

On appréciera donc que le message de navigation présente, au niveau des symboles modulés sur la fréquence porteuse, plusieurs groupes de symboles de synchronisation : l'en-tête de symboles de synchronisation marquant le début de chaque paquet de données ainsi que le motif de symboles de synchronisation apparaissant sur certains paquets. On note que l'en-tête de symboles de synchronisation n'a pas d'équivalent au niveau du message binaire (l'en-tête est rajouté à la séquence de symboles avant la transmission), tandis que le motif de symboles de synchronisation correspond à une séquence de bits incorporée dans la séquence binaire du message de navigation. Cette séquence de bits est choisie de sorte à faire apparaître le motif de synchronisation souhaité après encodage.

Etant donné que certains paquets de données présentent dès lors plusieurs séquences de symboles de synchronisation (l'en-tête et le motif) connues d'avance par les récepteurs, la détection du message de navigation par un récepteur est rendue plus fiable notamment dans des conditions de faible rapport signal à bruit.

De préférence, au moins un paquet de données par sous-trame contient le champ de bits de synchronisation traduit par application du code en le motif de symboles de synchronisation. De manière plus avantageuse, au moins chaque sixième paquet de données de la suite de paquets de données contient le champ de bits de synchronisation traduit par application du code en le motif de symboles de synchronisation.

Selon un mode de réalisation avantageux de l'invention, chaque paquet de données de la suite de paquets de données contient le champ de bits de synchronisation traduit par application du code en le motif de symboles de synchronisation.

Le motif de symboles de synchronisation et/ou sa position dans un sous-groupe (sous-trame) de paquets de données peut être spécifique à un émetteur (satellite ou pseudolite) ou un groupe d'émetteurs. Dans ce cas, le motif de symboles de synchronisation et/ou sa position dans un groupe (sous-trame) de paquets de données identifie l'émetteur ou le groupe d'émetteurs du signal radio GNSS. Dans le cadre d'une utilisation de l'invention sur un GNSS, il est alors possible de définir plusieurs groupes d'émetteurs (de satellite et/ou pseudolites), chaque groupe diffusant un motif de synchronisation à un autre instant (de la sous-trame).

Selon un mode de réalisation préféré de l'invention, les au moins certains paquets de données de la suite de paquets de données contiennent chacun un champ de bits de synchronisation choisi parmi plusieurs champs de bits de synchronisation différents de sorte à ce qu'il résulte une alternance de différents motifs de symboles de synchronisation au niveau de la suite des paquets. On appréciera qu'une multiplicité de motifs de symboles de synchronisation augmente le temps d'ambiguïté : p.ex. si trois motifs de symboles de synchronisation sont alternés sur des paquets ayant chacun une durée de 2 s, l'ambiguïté obtenue est de 6 s. L'intérêt de cette approche est que la contrainte sur la précision de connaissance du temps système est relâchée pour le récepteur.

De préférence, le code employé pour la transposition du message binaire de symboles est un code correcteur d'erreurs. Le code peut, notamment, être un code convolutif, p.ex. de longueur de contrainte 7 et de rendement ½ (cas du message de navigation du signal Galileo OS E1).

Le champ de bits de synchronisation comprend de préférence un tampon de bits tenant compte de la longueur de contrainte du code convolutif. L'effet mémoire du code convolutif entraîne que les premiers symboles obtenus par application du code sur le champ de bits de synchronisation dépend du contenu du champ précédent. Le tampon de bits permet de s'assurer que le motif de synchronisation n'est pas affecté par un changement du contenu du champ précédent.

Un autre aspect de l'invention concerne un procédé de positionnement par GNSS qui comprend la réception d'une pluralité de signaux radio GNSS tels que décrits ci-avant. La réception comprend la détection (optionnellement mais pas nécessairement aussi le décodage) du message de navigation. La détection du message de navigation comprend l'identification du motif de symboles de synchronisation, p.ex. complémentairement à la détection de l'en-tête de symboles de synchronisation.

Il sera apprécié que le procédé de positionnement par GNSS puisse être un procédé de positionnement par GNSS assisté (procédé A-GNSS) dans lequel les informations contenues dans le message de navigation ou des informations similaires sont transmises au récepteur par un canal de transmission autre que le message de navigation. On note, en particulier, que la présence du motif de symboles de synchronisation permet à un récepteur A-GNSS de mieux se synchroniser sur le message de navigation sans pour autant devoir le décoder (et accéder à son contenu).

Encore un autre aspect de l'invention concerne un récepteur GNSS équipé d'une mémoire contenant un programme d'ordinateur avec des instructions amenant le récepteur GNSS à mettre en œuvre le procédé de positionnement par GNSS brièvement décrit ci-dessus lorsque le programme d'ordinateur est exécuté par le récepteur GNSS.

Finalement, l'invention s'étend aussi sur un programme d'ordinateur comprenant des instructions amenant un récepteur GNSS à mettre en œuvre le procédé de positionnement lorsque le programme d'ordinateur est exécuté par le récepteur GNSS.

### Brève description des dessins

D'autres particularités et caractéristiques de l'invention ressortiront de la description détaillée d'un mode de réalisation avantageux présenté ci-dessous, à titre d'illustration, avec référence aux dessins annexés. Ceux-ci montrent:
Fig. 1: un schéma de la structure d'un message de radionavigation de type Galileo I/NAV prévu sur la composante de signal E1-B ;
Fig. 2: un schéma de la structure d'une sous-trame du message de radionavigation I/NAV sur la composante de signal E1-B ;
Fig. 3: un schéma de la structure d'une sous-trame du message de radionavigation I/NAV modifié selon une première variante de l'invention ;
Fig. 4: un schéma de la structure d'une sous-trame du message de radionavigation I/NAV modifié selon une deuxième variante de l'invention ;
Fig. 5-7: des schémas de la structure d'une sous-trame du message de radionavigation I/NAV modifié selon une troisième variante de l'invention ;
Fig. 8: un diagramme illustrant un procédé de génération d'un motif de symboles de synchronisation.

### Description d'une exécution préférée

Le mode de réalisation de l'invention discuté dans la suite se base sur le message de navigation I/NAV émis sur la composante E1-B (voie de données du signal E1 OS) du système de navigation Galileo, dont il propose une modification. Il convient toutefois de noter que ce choix a uniquement été fait à des fins d'illustration de l'invention, qui peut également être mise en œuvre sur d'autres signaux GNSS (de Galileo, GPS, Glonass, Compass etc.) Pour de plus amples informations sur le message I/NAV, le lecteur est invité à consulter le document « European GNSS (Galileo) Open Service Signal in Space Interface Control Document » (ci-après Galileo OS SIS ICD), version 1.1, Septembre 2010, publié par la Commission Européenne sur le site : http://ec.europa.eu/enterprise/policies/satnav/galileo/open-service/index_en.htm.

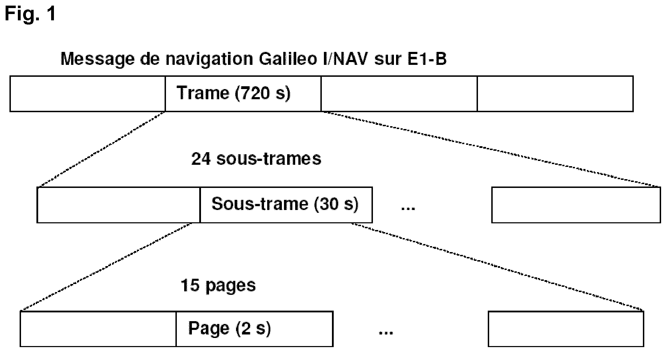

Le message Galileo I/NAV consiste en une trame de 720 secondes, découpée en 24 sous-trames de 30 secondes chacune. Celles-ci sont composées de 15 pages de 2 secondes, chaque page étant composée d'une partie paire et d'une partie impaire de durée 1 seconde. La structure du message I/NAV est schématiquement illustrée à la figure 1.

Les parties paire et impaire d'une page sont composées de 120 bits de données utiles, une page complète contenant donc 240 bits d'information utile. Ces bits sont codés avec un code convolutif (de longueur de contrainte L=7 et de rendement R=1/2). Les 120 bits de données utiles sont transformés en 240 symboles après codage, auxquels est ajouté un en-tête de synchronisation de 10 symboles. Une demi-page contient donc 250 symboles.

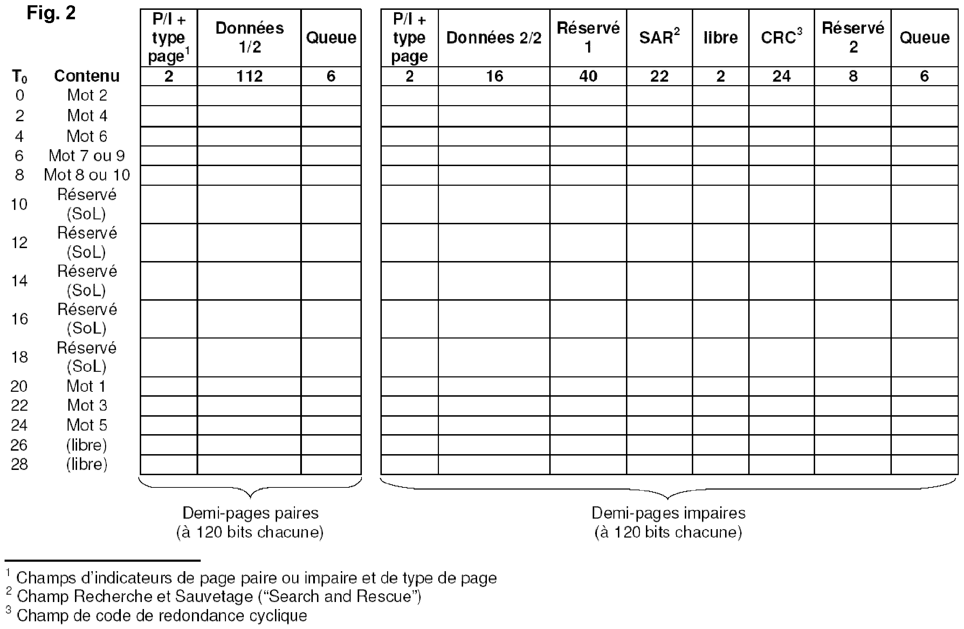

La configuration d'une sous-trame du signal Galileo OS E1-B est illustrée à la figure 2. Chaque page (une demi-page impaire et une demi-page paire) contient un champ de données de 128 bits, appelé mot et réparti sur les deux parties de la page (à raison de 16 et 112 bits respectivement).

Les mots contiennent les informations utilisées par le récepteur de navigation pour calculer sa position (éphémérides, temps système Galileo, corrections d'horloge, corrections ionosphériques, almanachs, ...).

Dix types de mots sont définis dans le Galileo OS SIS ICD selon leur contenu (mot°1 à mot 10) ; un onzième type est réservé pour les mots « spare » (libre), c'est-à-dire ne contenant pas d'information utile.

Les demi-pages représentent des paquets de données qui, après encodage, sont fait précéder par des en-têtes de symboles de synchronisation. Pour l'application de l'invention sur le signal Galileo OS E1-B, il est proposé, dans le cadre de cet exemple d'illustration, de pourvoir le champ « Réservé 1 » de chaque demi-page impaire d'un mot binaire de synchronisation. Ce champ a une taille de 40 bits. Il s'agit donc de définir une séquence de 40 bits se transformant en un motif de symboles de synchronisation une fois transformé en 80 symboles par le code convolutif. L'effet mémoire de ce dernier (L=7 et R=1/2) rend les 12 premiers symboles inconnus. L'information de synchronisation ne pourra donc être codée que sur 68 symboles.

Il est possible de choisir une séquence de bits de synchronisation (y inclus le tampon de bits prévu pour tenir compte de l'effet de mémoire de code convolutif) qui permet d'abaisser le seuil d'acquisition de plus de 3 dB. Il s'agit de choisir une séquence de bits de synchronisation qui, par application du code convolutif, résulte en un motif de symboles de synchronisation présentant des propriétés d'autocorrélation convenables.

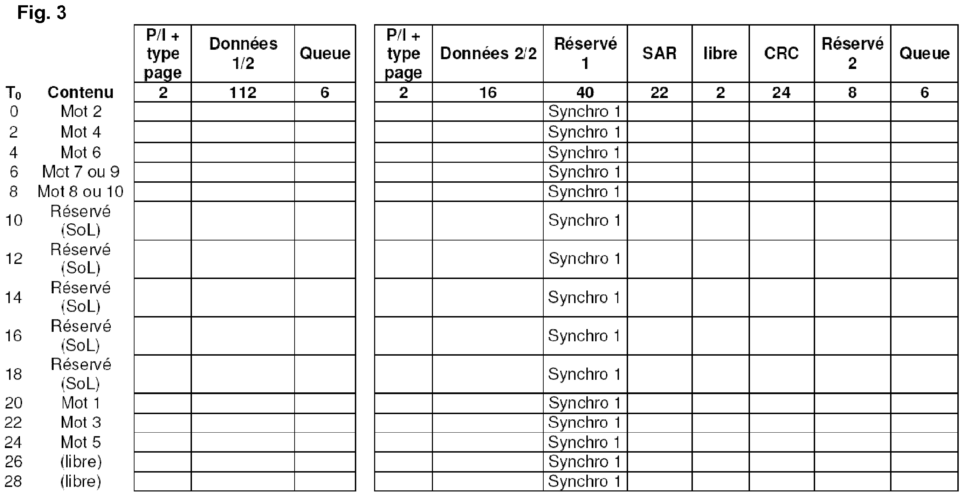

Selon une première variante de l'exemple, illustrée à la figure 3, le même champ de bits de synchronisation (c.-à-d. la même séquence de bits) est inséré dans le champ « Réservé 1 » de chaque demi-page impaire. L'ambiguïté temporelle résultante est de 2 s.

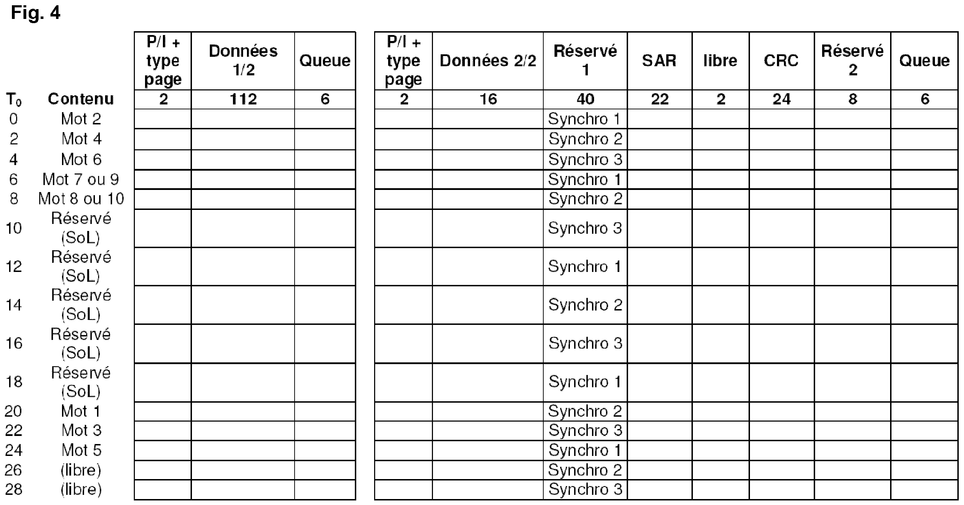

Selon une deuxième variante de l'exemple, illustrée à la figure 4, trois champs de bits de synchronisation différents sont alternés dans le champ « Réservé 1 » des demi-pages impaires de chaque sous-trame. L'ambiguïté temporelle résultante est de 6 s.

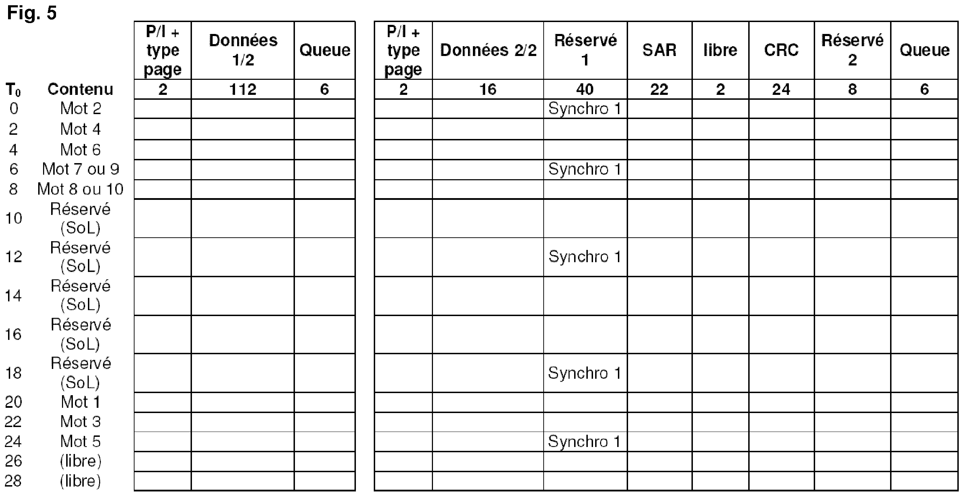

Une troisième variante (ajout d'une diversité spatiale) est illustrée aux figures 5 à 7. On considère N_{g} groupes de Nₛₐₜ satellites. L'ensemble des satellites d'un même groupe diffuse le motif de symboles de synchronisation aux mêmes instants dans la sous-trame.

Les groupes diffusent le motif de symboles de synchronisation à des instants différents. L'intérêt de l'approche réside dans le fait que l'ambigüité de temps est multipliée par N_{g}, ce qui relève la contrainte sur la précision de connaissance du temps système.

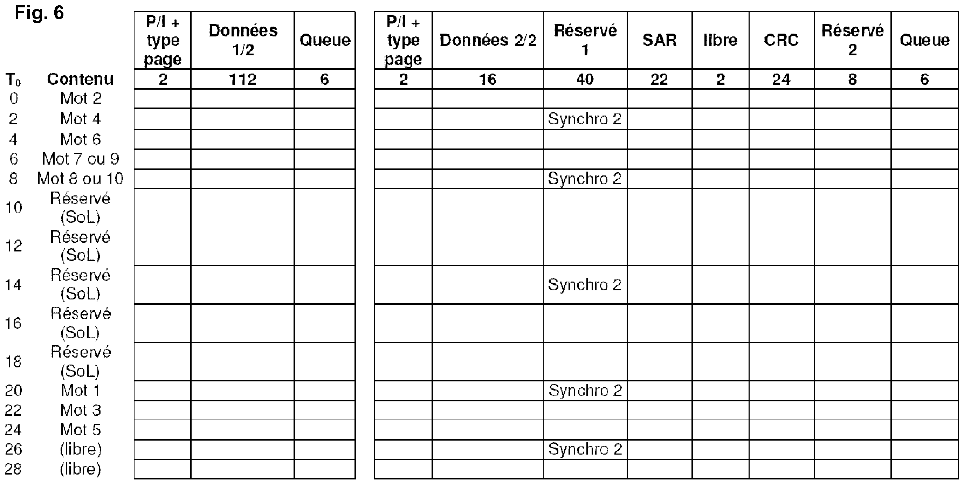

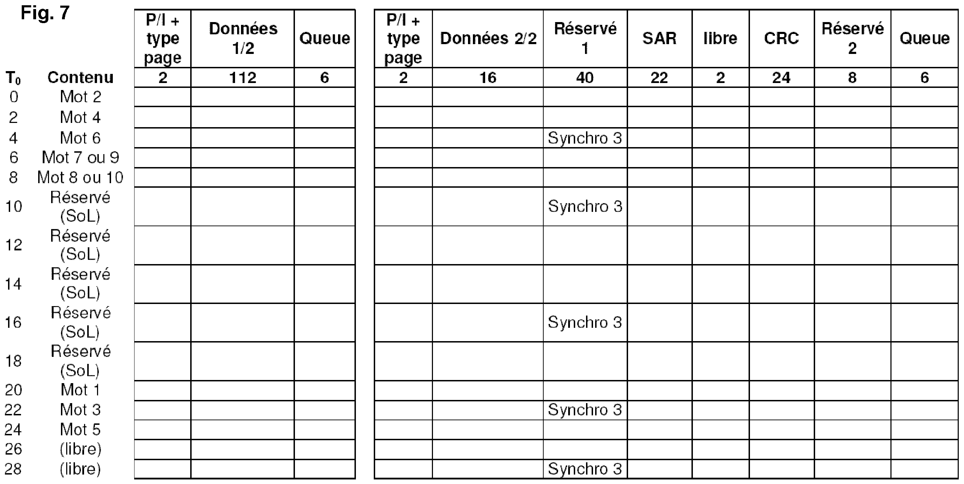

Avec trois groupes de 10 satellites Galileo par groupe on arrive à une ambiguïté temporelle de 6 s. Le premier groupe diffuse un premier motif de synchronisation dans les pages commençant aux instants T ₀ = 0, 6, 12, 18 et 24 (figure 5). Le deuxième groupe diffuse un deuxième motif de synchronisation dans les pages commençant aux instants T₀ = 2, 8, 14, 20 et 26 (figure 6). Le troisième groupe diffuse un troisième motif de synchronisation dans les pages commençant aux instants T₀ = 4, 10, 16, 22 et 28 (figure 7).

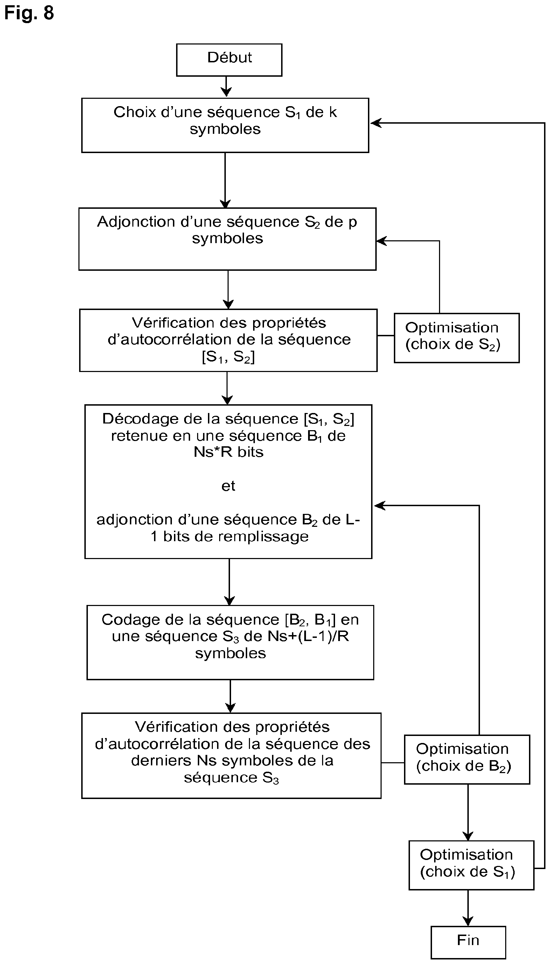

La figure 8 illustre un procédé possible pour trouver des motifs de symboles de synchronisation (et la séquence de bits correspondante). On note Nₛ la longueur (en symboles) du motif de symboles de synchronisation. (Dans l'exemple du champ « Réservé 1 », Nₛ = 68 car les 12 premiers symboles dépendent du contenu du champ précédent.) On cherche à déterminer une séquence de Nₛ symboles ayant des propriétés de synchronisation optimales, c'est-à-dire satisfaisant un certain nombre de critères de performance sur la fonction d'autocorrélation de la séquence (on recherche un fonction d'autocorrélation semblable à celle d'un bruit blanc, c'est-à-dire la plus proche de la fonction delta Kronecker).

On peut procéder de la manière illustrée à la figure 8. On choisit une séquence S₁ de symboles de longueur k = 2ⁿ-1, avec n désignant un entier et k < Nₛ. On choisira notamment une m-séquence (dénommée également « maximum length séquence »), séquence pseudoaléatoire ayant des propriétés d'autocorrélation optimales (très proche de celle d'un bruit blanc). Ensuite, on cherche une séquence S₂ de symboles de longueur p = Nₛ - k telle que la séquence concaténée [S₁, S₂] satisfasse aux conditions définies en termes de propriétés d'autocorrélation. Il existe 2^{p} séquences candidates pour la séquence S₂. A l'étape de recherche de la séquence S₂, on retient donc la meilleure séquence candidate parmi toutes les séquences possibles.

La séquence concaténée [S₁, S₂] de Nₛ symboles est ensuite décodée (p.ex. à l'aide d'un décodeur de Viterbi) pour trouver une séquence B₁ de Nₛ·R bits (R = rendement du code correcteur). Pour cette étape il faut trouver une séquence B₂ de L-1 bits (L = longueur de contrainte du code convolutif) à placer devant la séquence B₁ qui résulte (par application du code correcteur) en la « meilleure » séquence S₃ de symboles de longueur Nₛ + (L - 1)/R. Par « meilleure » séquence de symboles, on entend la séquence dont les Nₛ derniers symboles possèdent les meilleures propriétés d'autocorrélation. Comme il y a 2^{L-1} séquences possibles de L-1 bits de bourrage, il faut évaluer 2^{L-1} séquences de symboles candidates. Parmi celles-ci, on retient celle qui présente les meilleures propriétés de synchronisation.

Le procédé est répété pour un ensemble de séquences S₁ de symboles de longueur k. On retient finalement la séquence de Nₛ symboles et la séquence de L-1 bits de remplissage qui produisent le meilleur résultat.

## Revendications

1. Signal radio GNSS comprenant un message de navigation transmis en tant que suite de paquets de données, éventuellement organisés en groupes et/ou sous-groupes, chaque paquet de données se présentant en tant que séquence de symboles obtenue par application d'un code à des bits de données utiles, précédée par un en-tête de symboles de synchronisation, les paquets de données étant internement organisés en champs de données ;
**caractérisé en ce qu'**au moins certains paquets de données de la suite de paquets de données contiennent un champ de bits de synchronisation traduit par application dudit code en un motif de symboles de synchronisation.

2. Signal radio GNSS selon la revendication 1, dans lequel au moins chaque sixième paquet de données de la suite de paquets de données contient le champ de bits de synchronisation traduit par application dudit code en le motif de symboles de synchronisation.

3. Signal radio GNSS selon la revendication 1, dans lequel chaque paquet de données de la suite de paquets de données contient le champ de bits de synchronisation traduit par application dudit code en le motif de symboles de synchronisation.

4. Signal radio GNSS selon la revendication 1, dans lequel le motif de symboles de synchronisation et/ou sa position dans un sous-groupe de paquets de données identifie un émetteur ou un groupe d'émetteurs du signal radio GNSS.

5. Signal radio GNSS selon l'une quelconque des revendications 1 à 4, dans lequel les au moins certains paquets de données de la suite de paquets de données contiennent chacun un champ de bits de synchronisation choisi parmi plusieurs champs de bits de synchronisation différents de sorte à ce qu'il résulte une alternance de différents motifs de symboles de synchronisation au niveau de la suite des paquets.

6. Signal radio GNSS selon l'une quelconque des revendications 1 à 4, dans lequel ledit code est un code correcteur d'erreurs,

7. Signal radio GNSS selon la revendication 6, dans lequel ledit code est un code convolutif, p.ex. de longueur de contrainte 7 et de rendement 1/2.

8. Signal radio GNSS selon la revendication 7, dans lequel le champ de bits de synchronisation comprend un tampon de bits tenant compte de la longueur de contrainte du code convolutif.

9. Procédé de positionnement par GNSS comprenant :
la réception d'une pluralité de signaux radio GNSS selon l'une quelconque des revendications 1 à 8, ladite réception comprenant la détection du message de navigation,
**caractérisé en ce que** la détection du message de navigation comprend l'identification dudit motif de symboles de synchronisation, p.ex. complémentairement à la détection de l'en-tête de symboles de synchronisation.

10. Procédé de positionnement par GNSS selon la revendication 9, ledit procédé étant un procédé de positionnement par GNSS assisté.

11. Récepteur GNNS comprenant une mémoire contenant un programme d'ordinateur avec des instructions amenant le récepteur GNSS à mettre en œuvre le procédé selon la revendication 9 ou 10 lorsque le programme d'ordinateur est exécuté par le récepteur GNSS.

12. Programme d'ordinateur comprenant des instructions amenant un récepteur GNSS à mettre en œuvre le procédé selon la revendication 9 ou 10 lorsque le programme d'ordinateur est exécuté par le récepteur GNSS.

## Patentansprüche

1. GNSS-Funksignal, das eine Navigationsnachricht umfasst, die als Folge von Datenpaketen übertragen wird, welche gegebenenfalls in Gruppen und/oder Untergruppen organisiert sind, wobei sich jedes Datenpaket als Sequenz von Symbolen darstellt, die durch Anwendung eines Codes auf Nutzdatenbits erhalten wird, und welcher ein Header mit Synchronisationssymbolen vorangeht, wobei die Datenpakete intern in Datenfelder organisiert sind;
**dadurch gekennzeichnet, dass** mindestens einige Datenpakete aus der Folge von Datenpaketen ein Feld mit Synchronisationsbits enthalten, das durch Anwendung des Codes in ein Muster von Synchronisationssymbolen übersetzt wird.

2. GNSS-Funksignal nach Anspruch 1, wobei mindestens jedes sechste Datenpaket aus der Folge von Datenpaketen das Feld mit Synchronisationsbits, das durch Anwendung des Codes in das Muster von Synchronisationssymbolen übersetzt wird, enthält.

3. GNSS-Funksignal nach Anspruch 1, wobei jedes Datenpaket aus der Folge von Datenpaketen das Feld mit Synchronisationsbits, das durch Anwendung des Codes in das Muster von Synchronisationssymbolen übersetzt wird, enthält.

4. GNSS-Funksignal nach Anspruch 1, wobei das Muster von Synchronisationssymbolen und/oder seine Position in einer Untergruppe von Datenpaketen einen Sender oder eine Gruppe von Sendern des GNSS-Funksignals identifizieren.

5. GNSS-Funksignal nach einem der Ansprüche 1 bis 4, wobei die mindestens einigen Datenpakete aus der Folge von Datenpaketen jeweils ein Feld mit Synchronisationsbits, ausgewählt aus mehreren verschiedenen Feldern mit Synchronisationsbits, enthalten, sodass sich daraus auf Ebene der Paketfolge ein Wechsel verschiedener Muster von Synchronisationssymbolen ergibt.

6. GNSS-Funksignal nach einem der Ansprüche 1 bis 4, wobei es sich bei dem Code um einen Fehlerkorrekturcode handelt.

7. GNSS-Funksignal nach Anspruch 6, wobei es sich bei dem Code um einen Faltungscode, z. B. mit einer Einflusslänge 7 und einer Rate 1/2 handelt.

8. GNSS-Funksignal nach Anspruch 7, wobei das Feld mit Synchronisationsbits einen Bitpuffer umfasst, der die Einflusslänge des Faltungscodes berücksichtigt.

9. Verfahren zur Positionsbestimmung mittels GNSS, umfassend:
Empfangen einer Vielzahl von GNSS-Funksignalen nach einem der Ansprüche 1 bis 8, wobei das Empfangen das Erkennen der Navigationsnachricht umfasst,
**dadurch gekennzeichnet, dass** das Erkennen der Navigationsnachricht das Identifizieren des Musters von Synchronisationssymbolen, z. B. ergänzend zum Erkennen des Headers mit Synchronisationssymbolen umfasst.

10. Verfahren zur Positionsbestimmung mittels GNSS nach Anspruch 9, wobei es sich bei dem Verfahren um ein unterstütztes Verfahren zur Positionsbestimmung mittels GNSS handelt.

11. GNSS-Empfänger, der einen Speicher umfasst, welcher ein Computerprogramm mit Anweisungen enthält, die den GNSS-Empfänger dazu bringen, das Verfahren nach Anspruch 9 oder 10 umzusetzen, wenn das Computerprogramm vom GNSS-Empfänger ausgeführt wird.

12. Computerprogramm, das Anweisungen umfasst, die einen GNSS-Empfänger dazu bringen, das Verfahren nach Anspruch 9 oder 10 umzusetzen, wenn das Computerprogramm vom GNSS-Empfänger ausgeführt wird.

## Claims

1. A GNSS radio signal comprising a navigation message transmitted as a series of data packets, possibly organized into groups and/or subgroups, each data packet appearing as a sequence of symbols obtained by applying a code to payload data bits, preceded by a synchronization symbol header, the data packets being internally organized into data fields;
**characterized in that** at least some data packets of the series of data packets contain a synchronization bit field translated by applying said code into a synchronization symbol pattern.

2. The GNSS radio signal according to claim 1, wherein at least each sixth data packet of the series of data packets contains the synchronization bit field translated by application of said code into the synchronization symbol pattern.

3. The GNSS radio signal according to claim 1, wherein each data packet of the series of data packets contains the synchronization bit field translated by application of said code into the synchronization symbol pattern.

4. The GNSS radio signal according to claim 1, wherein the synchronization symbol pattern and/or its position in a sub-group of data packets identifies a transmitter or a group of transmitters of the GNSS radio signal.

5. The GNSS radio signal according to any one of claims 1 to 4, wherein the at least some data packets of the series of data packets each contain a synchronization bit field selected among several different synchronization bit fields so that it results an alternation of different synchronization symbol patterns at the level of the series of packets.

6. The GNSS radio signal according to any one of claims 1 to 4, wherein said code is an error correcting code,

7. The GNSS radio signal according to claim 6, wherein said code is a convolutional code, for example of constraint length 7 and yield 1/2.

8. The GNSS radio signal according to claim 7, wherein the synchronization bit field comprises a bit buffer taking into account the constraint length of the convolutional code.

9. A GNSS positioning method comprising:
the reception of a plurality of GNSS radio signals according to any one of claims 1 to 8, said reception comprising the detection of the navigation message,
**characterized in that** the detection of the navigation message comprises the identification of said of synchronization symbol pattern, for example complementary to the detection of the synchronization symbol header.

10. The GNSS positioning method according to claim 9, said method being an assisted GNSS positioning method.

11. A GNNS receiver comprising a memory containing a computer program with instructions causing the GNSS receiver to implement the method according to claim 9 or 10 when the computer program is executed by the GNSS receiver.

12. A computer program comprising instructions causing a GNSS receiver to implement the method according to claim 9 or 10 when the computer program is executed by the GNSS receiver.
